# EUROPÄISCHE PATENTSCHRIFT

(11) **EP 3 744 774 B1**
(45) Veröffentlichungstag und Bekanntmachung des Hinweises auf die Patenterteilung: **01.09.2021**
(21) Anmeldenummer: 19176869.6
(22) Anmeldetag: 28.05.2019
(51) Int. Cl.: C08J 11/26

(54) **VERFAHREN ZUM RECYCLING VON SILIKONEN**
METHOD FOR RECYCLING OF SILICONES
PROCÉDÉ DE RECYCLAGE DES SILICONES

(43) Veröffentlichungstag der Anmeldung: 02.12.2020
(73) Patentinhaber: Evonik Operations GmbH, 45128 Essen (DE)
(72) Erfinder: KNOTT, Wilfried, 45355 Essen (DE); DUDZIK, Horst, 45326 Essen (DE); SCHAEFER, Dietmar, 45529 Hattingen (DE)
(74) Vertreter: Evonik Patent Association

(56) Entgegenhaltungen:
- CN-A- 103 936 784
- CN-A- 109 400 951
- DE-A1- 19 502 393
- US-A- 4 276 425
- US-A- 5 110 972
- STEPHAN ENTHALER: "Iron-catalyzed depolymerization of polysiloxanes to produce dichlorodimethylsilane, diacetoxydimethylsilane, or dimethoxydimethylsilane", JOURNAL OF APPLIED POLYMER SCIENCE, Bd. 132, Nr. 3, 15. Januar 2015 (2015-01-15), XP055644825, US ISSN: 0021-8995, DOI: 10.1002/app.41287

## Beschreibung

Die Erfindung liegt auf dem Gebiet der Silikone, insbesondere betrifft sie ein Verfahren zum Recycling von Silikonen, bevorzugt von Silikonkautschuk und von Silikonölen durch deren chemische Transformation in Acetoxygruppen aufweisende Silane und/oder Siloxane und ein Verfahren zu deren Umwandlung in Alkoxygruppen tragende Silane und/oder Siloxane sowie ein Verfahren zur Umwandlung der Acetoxygruppen aufweisenden Silane und/oder Siloxane in Hydroxygruppen tragende Silane und/oder Siloxane.

Silikonteile erfüllen aufgrund ihrer speziellen Materialcharakteristik besondere Anforderungen in medizinischer, pharmazeutischer und lebensmitteltechnischer Hinsicht. Sie sind bei entsprechender Verarbeitung physiologisch völlig inert. So findet man Produkte aus Silikon in Lebensmittelanwendungen, in der Medizin und in pharmazeutischen Bereichen. Babysauger und Schnuller werden ebenso aus Silikon hergestellt wie Taucherbrillen. In technischen Industrieanwendungen taucht Silikon vielfach als Werkstoff für Dichtungen auf oder in dynamischen Anwendungen für Membranen. Im Automobilbereich wird es für Schläuche, Ummantelungen oder als Kabelisolierung eingesetzt.

Bezüglich seiner mechanischen Eigenschaften hat Silikon gegenüber anderen Kautschuktypen einen entscheidenden Vorteil: Sie bleiben bei Silikon über einen sehr großen Temperaturbereich auf relativ stabilem Niveau erhalten, wohingegen sich die mechanischen Eigenschaften vieler anderer Werkstoffe bei Kälte oder Hitze stark verschlechtern. Ist beispielsweise ein EPDM-Werkstoff hinsichtlich seiner mechanischen Eigenschaften beim Blick auf das technische Datenblatt einer Silikon-Mischung überlegen, weil hier die Eigenschaften bei Raumtemperatur angegeben sind, so zeigt sich bei hohen oder niedrigen Temperaturen das komplett gegenteilige Bild. Die Temperaturbeständigkeit in Luft liegt bei Silikon dabei in etwa bei -80 °C bis ca. 250 °C. Diese Eigenschaft wird gerne für Dichtungen verwendet, da hierbei der für Silikon typische, sehr niedrige Druckverformungsrest zum Tragen kommt.

Aufgrund ihrer exzellenten Ozon-, UV- und Witterungsbeständigkeit werden Mischungen aus Silikon zudem häufig in Außenanwendungen eingesetzt. Darüber hinaus ist Silikon sehr schwer entflammbar und sowohl gut elektrisch isolierfähig wie auch gut elektrisch leitfähig. Chemisch beständig ist Silikon z. B. gegenüber Pflanzen- und Tierfetten, heißem Wasser und Alkohol. Die Beständigkeit ist eingeschränkt gegenüber Säuren, Laugen, Kraftstoffen und Ketonen sowie Wasserdampf. Silikon hat zudem eine sehr hohe Gasdurchlässigkeit.

Neben industriellen Anwendungen wird Silikon seit Jahrzenten als bevorzugtes Elastomer im medizinischen Bereich gewählt. Komponenten aus Silikon werden dabei auch als Kurz- (für weniger als 30 Tage in Medizinprodukten der Klasse IIa) oder Langzeitimplantate (für 30 Tage oder mehr in Medizinprodukten der Klasse IIb verwendet) und erfüllen dort kritische Funktionen in Geräten wie Herzkathetern, Herzschrittmachern, Beatmungsgeräten, Neurostimulatoren oder Defibrillatoren. Silikonkautschuk, der für Langzeitimplantate eingesetzt werden soll, wird weltweit nur von sehr wenigen Produzenten angeboten (z. B. von NuSil Technology). Die Herstellung der Mischungen erfolgt dabei unter strengen Auflagen der U.S. Food and Drug Administration (FDA). Auch bei der Verarbeitung muss auf besondere Reinheit geachtet werden und eine Komponentenproduktion im Reinraum stattfinden.

Ein wichtiger Vorteil von Silikon ist dabei, dass er biokompatibel ist und somit eine gute Verträglichkeit für den Menschen aufweist. Die Biokompatibilität einer Silikonmischung wird häufig durch USP Class VI-Einstufungen nachgewiesen (USP steht für United States Pharmacopeia) oder durch Tests gemäß der strengeren (DIN EN) ISO 10993 Richtlinie. Die (DIN EN) ISO 10993 dient dabei vor allen Dingen dem Testen von Medizinprodukten, die für lange Zeit oder permanent im menschlichen Körper implantiert werden. Für kürzere Anwendungen ist die Einstufung nach USP Class VI oder ggf. eine niedrigere Einstufung ausreichend.

Darüber hinaus bietet Silikon aufgrund seiner Eigenschaft, in einem weiten Temperaturbereich von etwa - 80 °C bis ca. 250 °C eingesetzt werden zu können, die Möglichkeit zur Dampfsterilisation (Erhitzen im Autoklaven). Produkte aus Silikon können so von lebenden Mikroorganismen, deren Dauerformen, Viren etc. befreit werden. Auch die guten elektrischen Isolationsfähigkeiten von Silikon sind im medizinischen Bereich von besonderer Bedeutung.

Durch Variation der eingesetzten Silikonkautschuke und der Vernetzungsarten können Silikone besondere Eigenschaften erhalten. So sind HTV-Silikonkautschuke in einem breiten Temperaturbereich von -50 °C bis zu 200 °C, teilweise bis zu 300 °C flexibel und beständig. Sie finden sich in Dichtungen der Automobil- oder Lebensmittelindustrie, in Kabelummantelungen oder als Dämpfungsmaterial.

RTV-Silikonkautschuke werden vor allem aufgrund ihrer Wärmeleitfähigkeit und elektrischen Isolierfähigkeit geschätzt, weshalb sie vorzugsweise im Elektro- und Elektronikbereich eingesetzt werden.

Flüssig-Silikone (auch LSR, *liquid silicone rubber*) haben gegenüber den HTV- und RTV-Silikonkautschuken eine niedrigere Viskosität. Sie können im Spritzgussverfahren in unterschiedlichste Formen gebracht werden und z.B. zu Silikonschläuchen verarbeitet werden. Da LSR-Silikone immer platinvernetzt hergestellt werden, können Produkte auf der Basis von Flüssigsilikonen in medizintechnischen Bereichen eingesetzt werden.

Dank seiner hohen Stabilität innerhalb des menschlichen Körpers stellt Silikon somit einen sehr guten Schutz kritischer Komponenten dar und wird aufgrund der genannten Eigenschaften zudem bevorzugt für funktionale Teile eingesetzt.

Grundsätzlich liegt der Unterschied von Silikonkautschuk im Vergleich zu anderen organischen Elastomeren darin, dass seine Hauptketten, die eine anorganische Struktur aufweisen, nicht aus Kohlenstoffverbindungen bestehen, sondern aus Kombinationen von Silizium- und Sauerstoffatomen gebildet wird, wobei als Füllstoff vor allem pyrogene Kieselsäure zur Ausbildung guter Eigenschaften verwendet wird.

Entsprechend ihrer Aggregatszustände sowie ihrer Vulkanisationstemperaturen lassen sich Silikonkautschuke in drei Gruppen gliedern:
Als HTV (high temperature vulcanizing) oder HCR (high consistency rubber) bezeichnet man Silikonkautschuke, deren Rohmaterial fest ist. Sie werden bei hohen Temperaturen üblicherweise zwischen 140 °C und 200 °C vulkanisiert. Die Vernetzung erfolgt durch Peroxide oder durch Additionsreaktion, wobei Platinverbindungen als Katalysator eingesetzt werden.

Flüssigsilikon oder LSR (Liquid Silikon Rubber) ist als Rohmaterial (zäh-)flüssig und besteht aus zwei Komponenten, die direkt vor der Verarbeitung gemischt werden. Die Vernetzung erfolgt durch Additionsreaktion bei ähnlichen Temperaturen wie bei den HTV-Typen, wobei die Vernetzung generell wesentlich schneller erfolgt.

Beide Silikon-Typen können eingefärbt werden. Fertige Elastomer-Artikel aus HTV-Silikon und LSR-Silikon unterscheiden sich in ihren Eigenschaften kaum.

Die dritte Gruppe sind sogenannte RTV-Silikone (room temperature vulcanizing). Bei diesen geschieht die Vernetzung bereits bei Raumtemperatur. Sie werden gerne als Dichtungsmasse oder in der Prototypenfertigung verwendet. Verfügbar sind sie sowohl aus Ein- wie auch als Zweikomponentensysteme.

So vorteilhaft die aus der besonderen chemischen Stabilität der Silikone ableitbaren Gebrauchseigenschaften für die Nutzungsdauer der daraus gefertigten Gegenstände sind, so belastend ist deren Stabilität bei der Entsorgung der Silikone am Ende ihres Life-Cycles.

Eine werkstoffliche Verwertung von Silikonkautschuken ist in sehr eingeschränktem Ausmaß möglich, indem man z.B. ausgediente Werkstücke bestehend aus Silikonkautschuk mechanisch zerkleinert und das so gewonnene, zerkleinerte Gut als Füllmaterial neuen, noch auszuhärtenden Silikonkautschukmassen hinzufügt. Der Transport zu und die Einlagerung der Silikonabfälle auf geeigneten Deponien verursachen erhebliche Kosten. In einer sich ständig verschärfenden Umweltdiskussion setzt ihre natürliche Nicht- bzw. Schwerabbaubarkeit Silikone unter dem Nachhaltigkeitsaspekt darüber hinaus in ein ungünstiges Licht.

Die energetische Verwertung, die bei rein Kohlenwasserstoff basierten Polymeren wie z.B. bei Polyethylen und Polypropylen durch Verbrennung eine Möglichkeit darstellt unter Kohlendioxid- und Wasser-Freisetzung diese Polymere in thermische Energie umzuwandeln, stellt für Silikone keine gangbare Option dar, da bei deren Verbrennung riesige Mengen feinteiligen Siliziumdioxids entstehen, die für noch größere technische Probleme sorgen. Andererseits wären nach Angaben der Firma ECO U.S.A. beim Recycling von 1 Tonne Silikonkautschuk 5774 kWh Energie, 16,3 Fässer Erdöl und 98 Millionen BTU Energie einzusparen.

Abseits der werkstofflichen und der energetischen Verwertung von Silikonabfällen definiert sich die zu lösende technische Aufgabe somit darin, ein ökologisch sinnvolles und zugleich wirtschaftlich attraktives stoffliches Recyclingverfahren für Silikone aller Art zu schaffen, das es gestattet, deren Deponieverbringung zu vermeiden und die Silikonmaterialien wieder in wertstiftende, neue Silikon-basierte Stoffströme einzuspeisen. Darüber hinaus sollte das gesuchte Verfahren auch auf Silikonöle anwendbar sein.

US 5110972 widmet sich der stofflichen Wiederverwertung von Alt-Silikon durch Auflösen des Silikonabfalls in einem geeigneten Solvens durch Umwandeln des Abfalls in Dimethylsiloxanzyklen wie D₃, D₄, D₅ und weiteren durch Anwendung eines zweistufigen Säure-/Base-katalysierten Spaltprozesses. Der dort eingesetzte Silikonabfall besteht aus Flüssigkeiten oder elastomeren Stoffen hohen Molekulargewichts, besonders Feststoffen, die von einem Silikonpolymer gebildet werden, das typischerweise kurze Alkylgruppen, insbesondere Methylgruppen trägt. In hohen Ausbeuten werden so Silikonzyklen destillativ gewonnen.

In der Japanischen Offenlegungsschrift Heisei 9-176364, wird ein Verfahren vorgeschlagen, bei dem Silikonharze unter der Einwirkung von Orthocarbonsäureestern, sowie Verbindungen mit aktiven Wasserstoff enthaltenden Gruppen und Katalysatoren in recyclingfähige Siloxanmonomere oder - oligomere zerlegt werden. Zum Nachteil gereicht dem dort beschriebenen, unter relativ milden und kostengünstigen Bedingungen durchführbaren Verfahren die unvermeidbare Behaftung mit unerwünschten Nebenprodukten, die aus der Hydrolyse der Orthocarbonsäureester stammen, wie z.B. Methylformiat für den Fall, dass Methylorthoformiat als Orthocarbonsäureester eingesetzt wird. Weil Monomere respektive Oligomere, die den Orthocarbonsäureester enthalten nicht direkt, das heißt, wie sie anfallen, eingesetzt werden können, ist deren weitere Aufarbeitung, wie z. B. in der japanischen Offenlegungsschrift Heisei 9-7779 beschrieben, notwendig. In Sicht dieser Schwierigkeiten und des zu treibenden Aufwandes hat es das Verfahren nicht in die industrielle Praxis geschafft.

In Sicht dieser japanischen Schriften beschäftigt sich die US 6172253 B1 ebenfalls mit der stofflichen Wiederverwertung Siloxan-haltiger, d. h. Si-O-Si-Bindungen aufweisender Massen, indem diese mit Alkylcarbonaten, sowie Verbindungen die aktiven Wasserstoff enthalten und in Gegenwart eines Katalysators zu einer großen Vielzahl von Silikon-Monomeren und/ oder Silikon-Oligomeren (mehr als 200 verschiedene im Produktgemisch) zerlegt werden.

Ein Silikongummi, das dieser Lehre folgend in einem Gemisch aus Dimethylcarbonat, Methanol und unter Zusatz von Schwefelsäure für 4 Stunden bei 90°C unter Rückflussbedingungen behandelt wurde, führt zu einem wilden Substanzgemisch, das mehr als 200 verschiedene Verbindungen, darunter auch Dimethoxydimethylsilan umfasst.

Die Nichtselektivität des ansonsten milden Aufschlussprozesses macht diesen unattraktiv, da jedwede Wiederverwendung der aus der Zersetzungsreaktion stammenden Stofflichkeit erst das Durchlaufen eines aufwendigen thermischen Trennverfahrens bedingt.

Die EP 1057855 A1 lehrt ein Aufschlussverfahren für quervernetzte Silikonabfälle, wobei diese hydrolysiert werden, indem man sie mit einem hydroxylgruppenhaltigen Solvens wie Methanol, Ethanol oder Isopropanol unter superkritischen Bedingungen zur Umsetzung bringt. Erhalten werden dabei nichtquervernetzte, nicht-funktionelle Silikonverbindungen (= Silikonöle), wie die darin enthaltenen Infrarotspektren belegen. Die Notwendigkeit superkritische Druckbedingungen einzuhalten, bedingt die Nutzung druckfester Apparaturen, was den Prozess in einer industriellen Größenordnung teuer macht.

Enthaler et al. beschäftigen sich mit der Eisen-katalysierten Depolymerisation von Polysiloxanen zur Herstellung von Dichlordimethylsilan, Diacetoxydimethylsilan und Dimethoxydimethylsilan (J. Appl. Polym. Sci. 2015, DOI:10.1002/APP.41287). Zur Gewinnung von Dimethylchlorsilan lassen die Autoren aromatische und aliphatische Säurechloride sowie para-Toluolsulfonsäurechlorid Eisensalz katalysiert bei Temperaturen von 170 bis 190°C auf α,ω-Dihydroxypolydimethylsiloxane einwirken. Die Ausbeuten an Dimethyldichlorsilan sind in den meisten vorgestellten Reaktionssystemen sehr bescheiden und liegen im Bereich von <1 bis 62% (Table I, ibid.), lediglich das Reaktionssystem bestehend aus α,ω-Dihydroxypolydimethylsiloxan (Kettenlänge N = 7), 7,5 mol-% Eisen(III)fluorid und 3 Äquivalenten Benzoylchlorid jeweils bezogen auf jede eingesetzte Dimethylsiloxy-Einheit ergibt nach fünfstündiger Behandlung bei 190°C Dimethyldichlorsilan in 86% Aubeute.

Abgesehen davon, dass eine Depolymerisation von Silikonen zu Chlorsilankörpern aus Umwelt- ,Handlings- und Abfallvermeidungsgesichtspunkten nicht erstrebenswert ist, was insbesondere für Chemieunternehmen zutrifft, die nicht selbst die Müller-Rochow-Synthese betreiben, macht der Einsatz von Carbonsäurechloriden den Prozess teuer und unwirtschaftlich. Zudem ist die benötigte Menge (Eisen(III)fluorid erheblich und beträgt per 550 g des eingesetzten α,ω-Dihydroxypolydimethylsiloxans bereits 41g.

Dieselbe Literaturstelle (Seite 5 ff.) beschreibt auch die Möglichkeit unter Eisensalz-Katalyse α,ω-Dihydroxypolydimethylsiloxane (Kettenlänge N = 7) mit Essigsäureanhydrid im Temperaturbereich zwischen 140°C und 180°C und einer Reaktionszeit von 16 Stunden zu depolymerisieren. Hierbei gelangt ein Druckrohr zum Einsatz. Ein Versuch mit 2,5 mol-% Eisen(III)chlorid, 2 Äquivalenten Acetanhydrid jeweils bezogen auf jede eingesetzte Dimethylsiloxy-Einheit bei 160°C ergibt eine 51% Ausbeute an Dicetoxydimethylsilan neben Anteilen an Polydimethylsiloxanzyklen wie D₄ und D₆.

Für technische Zwecke ist die Ausbeute bescheiden und zudem ist der Einsatz einer recht großen Menge hochkorrosiven Eisenhalogenids unattraktiv, da die meisten Chemiereaktoren aus hochlegierten Edelstählen und nicht beispielsweise aus Hastelloy® gefertigt werden.

Noch weiter von einer technischen Realisation entfernt, erscheinen die in gleicher Literaturstelle beschriebenen Anstrengungen unter Zuhilfenahme eines Autoklaven, α,ω-Dihydroxypolydimethylsiloxane (Kettenlänge N = 7) in einem Überschuss an Methanol, Eisensalz-katalysiert (Fe(III)fluorid) und unter Zugabe von 3,0 Äquivalenten Poly(propylencarbonat) bezogen auf jede eingesetzte Dimethylsiloxy-Einheit im Laufe von 24 Stunden bei 180°C Reaktionstemperatur in das angestrebte Dimethoxydimethylsilan zu depolymerisieren. In nur 18% Ausbeute entsteht hierbei Dimethoxydimethylsilan neben 14% 1,2-Propandiol und 32% Propylencarbonat.

Ein weiterer Weg zum stofflichen Recycling von Silikonen, speziell Silikonöl, wird von Enthaler et. al. in ACS Sustainable Chemistry & Engineering 3(1), 2015, Seiten 163 -169 beschrieben. Die Autoren benutzen das Reagenz Bortrifluorid Etherat um z.B. ausgehend von einem nur 7 D-Einheiten enthaltenden α,ω-Dihydroxypolydimethylsioxan in mäßigen Ausbeuten Difluordimethylsilan und 1,3-Difluor-1,1,3,3-tetramethyldisiloxan zu gewinnen und diese anschließend unter der Einwirkung einer wässrigen Natronlauge in ein α,ω-Dihydroxypolydimethylsiloxan umzuwandeln. Nicht zuletzt diskreditieren die Handhabung des kostspieligen Borreagenzes sowie die von Fluoriden, die wie die Autoren spekulieren, geeignet wären Bortrifluorid zu recyclen, diese Methode für die industrielle Praxis.

Enthaler et al. in Eur. J. Lipid Technol. 2015, 117, 778-785 berichten von Versuchen zur Eisen-katalysierten Depolymerisation von Poly(dimethylsiloxanen) mit Hexansäureanhydrid bei 200°C über die Zeitdauer von 24 Stunden. Die Autoren beobachten, dass diese Methode Siliconöle in guten Ausbeuten in die entsprechenden Hexanoxy-Funktionen tragenden kurzkettigen Silikonkörper überführt, jedoch da ihre Begrenzung findet, wo hochmolekulare End-of-Life Silikone, wie z. B. solche, die für Backformen Verwendung finden, eingesetzt werden.

So bereichernd diese akademischen Beiträge zum Verständnis der hierin involvierten Abbaumechanismen sind, kann man feststellen, dass es an einer technisch gangbaren und attraktiven Route mangelt, sowohl Silikonöle als auch feste Silikone stofflich zu Recyclen.

Die WO 2014/130948 A1 lehrt ein Verfahren zur Wiederverwertung von Silikonabfällen aus einer Mischung mit einem organischen Polymer und einem Depolymerisationskatalysator heraus, wobei diese Mischung mindestens so hoch erhitzt wird, dass wenigstens ein Teil des eingesetzten Silikons in ein Cyclosiloxan und einen Rückstand umgewandelt wird und das Cyclosiloxan im Rahmen eines Ausgasens aus der erhitzten Matrix entfernt wird. Die Beispiele dieser Patentschrift verdeutlichen, dass der zur Gewinnung von Siloxanzyklen zu treibende technische Aufwand beträchtlich ist, da die Depolymerisation zunächst in einem ersten Schritt in einer Verschaltung zweier kommunizierender Schneckenextruder bei hohen Temperaturen und unter Anlegen eines Hilfsvakuums vorgenommen wird, bevor der aus dem ersten Schritt hervorgehende Rückstand dann in einem zweiten Schritt in einem mit Rührer ausgerüsteten Equipment bei Temperaturen bis 260°C und unter Anlegen eines Hilfsvakuums noch weiter depolymerisiert wird.

In Sicht dieses Standes der Technik stellt sich die Aufgabe, ein einfaches Verfahren zu finden, dass das Recycling von Silikonen ermöglicht. Überraschenderweise konnten die Erfinder nun ein Verfahren bereitstellen, das dies ermöglicht und das die Transfomation sowohl von Silikonkautschuk als auch von Silikonölen in reaktive Siloxane und/oder Silane, sowie deren leichte Verarbeitung z.B. in Alkoxygruppen tragende Silane und/ oder Siloxane und/oder Hydroxygruppen tragende Silane und/ oder Siloxane gestattet. Überraschenderweise wurde gefunden, dass man nicht nur Silikonöle, sondern auch feste Silikonkautschuke wertstiftend in reaktive Acetoxygruppen tragende Siloxane und/oder Silane umwandeln kann, indem man sie einer Wärmebehandlung in Aufschlusssystemen jeweils unter Zusatz von Essigsäure unterzieht.

Gegenstand der vorliegenden Erfindung ist vor diesem Hintergrund ein Verfahren für das Recycling von Silikonen, insbesondere von Silikonkautschuk und/oder Silikonölen, durch deren chemische Transformation in Acetoxygruppen aufweisende Siloxane und/oder Silane, wobei man die zu recyclenden Silikone einer Wärmebehandlung in Aufschlusssystemen, umfassend Essigsäureanhydrid und/oder Acetoxysiloxan, sowie zumindest eine Brönstedtsäure, vorzugsweise unter Zusatz von Essigsäure unterzieht.

Gemäß einer besonders bevorzugten Ausführungsform wird das erfindungsgemäße Verfahren unter Zusatz von Essigsäure durchgeführt.

In einer bevorzugten Ausführungsform der Erfindung umfasst das Aufschlusssystem a) Essigsäureanhydrid und Brönstedtsäure, b) Essigsäureanhydrid, Siloxanzyklen und/oder hydroxyfunktionelle Siloxane sowie Brönstedtsäure, c) Acetoxysiloxan und Brönstedtsäure, oder d) Acetoxysiloxan, Siloxanzyklen und/oder hydroxyfunktionelle Siloxane, Essigsäureanhydrid sowie Brönstedtsäure, wobei vorzugsweise jeweils Essigsäure zugesetzt wird.

Erfindungsgemäß bevorzugt werden als Brönstedtsäuren Protonensäuren mit einem pKa-Wert kleiner - 1,30, wie vorzugsweise Salpetersäure, Methansulfonsäure und para-Toluolsulfonsäure, vorzugsweise Protonensäuren mit einem pKa-Wert kleiner - 2,90 wie vorzugsweise konzentrierte Schwefelsäure, besonders bevorzugt Protonensäuren mit einem pKa-Wert kleiner - 4,90 wie vorzugsweise die Perfluoralkansulfonsäuren wie Heptafluorpropansulfonsäure, Pentafluorethansulfonsäure, Trifluormethansulfonsäure, dann Perchlorsäure und Chlorsulfonsäure
verwendet, wobei unter diesen insbesondere Perfluoralkansulfonsäuren präferiert werden, und hierbei Trifluormethansulfonsäure ganz besonders bevorzugt ist,
sowie des weiteren auch vorzugsweise sulfonsaure oder perfluoralkylsulfonsaure lonenaustauscherharze zum Beispiel in Form der kommerziell verfügbaren Typen Amberlyst® und Lewatit® aber auch in Form der perfluoralkylsulfonsauren Harze wie Nafion® (dabei zum Beispiel der Typ NR 50).

Die erfindungsgemäß besonders bevorzugt einzusetzende Brönstedtsäure ist eine Perfluoralkansulfonsäure und hierbei ganz besonders bevorzugt Trifluormethansulfonsäure.

Im Rahmen der Erfindung können grundsätzlich alle Silikone recycelt werden, insbesondere Silikonkautschuk und/ oder Silikonöle. Insbesondere gilt das für die Gesamtheit der im einleitenden Beschreibungsteil angeführten Silikone. Auf diese wird hiermit ausdrücklich Bezug genommen. Gemäß einer bevorzugten Ausführungsform der Erfindung betrifft das erfindungsgemäße Verfahren ein Verfahren für das Recycling von Silikonen, insbesondere von Silikonkautschuk und/ oder Silikonölen, ausgenommen Hexamethyldisiloxan. Gemäß einer bevorzugten Ausführungsform der Erfindung sind die zu recyclenden Silikonöle aus D- und M-Einheiten zusammengesetzt. Gemäß einer weiteren bevorzugten Ausführungsform der Erfindung weisen die zu recyclenden Silikone Molmassen > 236 g/ mol auf.

Das erfindungsgemäße Verfahren für das Recycling von Silikonen lässt sich eindrucksvoll an dem Aufschluss eines hochwertigen Silikonschlauchs demonstrieren (Beispiel 1).

Dieser erfindungsgemäße Aufschluss hochmolekularer fester Silikone gilt entsprechend auch für Silikonöle (z.B. für die mit Trimethylsilylgruppen endverschlossenen Polydimethylsiloxane, Beispiel 2).

Erfindungsgemäß bevorzugt wird die Wärmebehandlung der Silikonöle respektive der Silikonkautschuke in den Aufschlusssystemen vorzugsweise zwischen 50°C und 200°C, bevorzugt zwischen 80°C und 160°C, insbesondere zwischen 120°C und 150°C vorgenommen.

Das erfindungsgemäße Aufschlussverfahren kann vorteilhafterweise bei Normaldruck (1013 hPa), Unter- oder aber auch zur Realisierung hoher Wärmebehandlungstemperaturen bis 200°C in druckfesten Apparaturen unter Überdruck vorgenommen werden. Bevorzugt wird das erfindungsgemäße Aufschlussverfahren bei Normaldruck durchgeführt.

Erfindungsgemäß bevorzugt wird die in den Aufschlusssystemen verwendete Brönstedtsäure in Mengen vorteilhafterweise von 0,1 bis 1,5 Massenprozent, bevorzugt in Mengen von 0,15 bis 1,0 Massenprozent, besonders bevorzugt in Mengen von 0,2 bis 0,8 Massenprozent bezogen auf die Gesamtmasse des jeweiligen Aufschlusssystems eingesetzt.

Erfindungsgemäß bevorzugt wird den Aufschlusssystemen Essigsäure in Mengen von vorteilhafterweise 0,5 bis 4,0 Massenprozent, bevorzugt von 1,5 bis 3,5 Massenprozent bezogen auf die Masse des gesamten jeweiligen Aufschlusssystems hinzugesetzt.

Falls gewünscht, können die aus dem erfindungsgemäßen Prozess gewonnenen, mit reaktiven Acetoxyfunktionen versehenen Silane und/oder Siloxane z.B. als polymerysationsaktive Massen ggf. noch in Abmischung mit weiteren vernetzenden Silanen und/ oder Siloxanen, mit Füllstoffen gefüllt und/ oder ungefüllt wieder als Kleb - und Dichtstoffe eingesetzt werden.

Für den Fachmann verständlich prägt die jeweilige Art und chemische Zusammensetzung des eingesetzten, für das Recycling vorgesehenen Silikons die Zusammensetzung der nach dem erfindungsgemäßen Verfahren erhaltenen Acetoxygruppen enthaltenden Siloxane. Sind im Vormaterial z. B. Trimethylsilyl-Einheiten enthalten, so führt deren Präsenz auch zur Bildung von Trimethylsilylacetat (vgl. Bsp. 2, Silikonöl).

Somit stellt das erfindungsgemäße Verfahren in seiner auf das Recycling von Polydimethylsiliconölen gerichteten Ausgestaltung sogar einen attraktiven synthetischen Alternativzugang zu Trimethylsilylacetat dar. Trimethylsilylacetat ist ein Silylierungsreagenz, das in der Schutzgruppenchemie insbesondere bei der Synthese von Naturstoffen und von pharmazeutisch wirksamen Molekülen eine große Rolle spielt. Die Bedeutung der Trimethylsilylschutzgruppe wird zum Beispiel von Oppolzer in der US 4328353 bei der Synthese von Norpatchoulenol aufgezeigt.

In einer bevorzugten Ausführungsform der Erfindung umfasst das Aufschlusssystem Essigsäureanhydrid. Die dabei vorteilhafterweise eingesetzte Menge an Essigsäureanhydrid bemisst sich sowohl an der der für das Recycling eingesetzten Menge an Silikonkautschuk und/ oder Silikonölen sowie der angestrebten Zielstruktur des Acetoxygruppen-tragenden Silans/ Siloxan (Definition der jeweils angestrebten mittleren Kettenlänge durch die Menge verwendeten Acetanhydrids bezogen auf die Menge der zu recyclenden Silikonmatrix).

Nimmt man das erfindungsgemäße Aufschlussverfahren in mit einfachen Rühr- und/ oder Mischaggregaten versehenen Reaktoren vor, so leitet allein die Beobachtung, wie sich die am Anfang des Prozesses teilweise doch sehr heterogene Reaktionsmatrix (z.B. bestehend aus stückigen Silikonkautschukteilen mit Flüssigkeit) unter Zugabe der jeweiligen Reaktanden Durchmischen lässt, das Vorgehen, ggf. weitere Reaktionsbestandteile hinzuzufügen. Illustriert wird ein solches Vorgehen in Beispiel 5.

Im Sinne der vorliegenden Erfindung umfasst der Begriff des Acetoxygruppen enthaltenden Siloxans insbesondere auch solche Stofflichkeiten, die wechselnde Mengen Acetoxygruppen aufweisender Silane, wie z.B. Trimethylsilylacetat, Diacetoxydimethylsilan, etc.) enthalten.

Das Polymerisationsverhalten der erfindungsgemäß gewonnenen, mit reaktiven Acetoxygruppen versehenen Silane und/oder Siloxane lässt sich bereits in einem einfachen Handversuch zeigen, indem man ein kleines Volumen von ca. 0,5 bis 2 ml auf einen schwarzen Bakelitdeckel aufträgt. Insbesondere die noch Brönstedt-sauren Acetoxysilane/ -siloxane polymerisieren unter dem Einfluss von Luftfeuchtigkeit sehr zügig und hinterlassen dabei einen opaken, weißen Silikonfilm.

Alternativ gestattet die hohe Reaktivität der nach dem erfindungsgemäßen Verfahren gewonnenen Acetoxysilane und/oder -siloxane auch deren Transformation z.B. in die entsprechenden Alkoxysilane/ - siloxane.

Somit betrifft ein weiterer Gegenstand der vorliegenden Erfindung die Herstellung von alkoxysubstituierten Silanen und/oder Siloxanen aus den erfindungsgemäß gewonnenen, Brönstedt-sauren Acetoxysilanen und/oder -siloxanen.

Die Erfinder haben festgestellt, dass man die nach dem erfindungsgemäßen Verfahren gewonnenen, noch Brönstedt-sauren Acetoxysilane und/oder -siloxane zunächst vorzugsweise mit einer ausreichenden Menge einer Base beaufschlagen sollte, um die darin enthaltene Brönstedtsäure, vorzugswiese Trifluormethansulfonsäure, zu neutralisieren. Fügt man z.B.einem trifluormethansulfonsauren Acetoxysiloxan, das erfindungsgemäß aus dem Aufschluß eines Silikonkautschuks gewonnen wurde, die zur Neutralisation der darin befindlichen Trifluormethansulfonsäure notwendige Menge an Kaliumacetat (bevorzugt im Überschuss) hinzu, trennt die Salzfällung ggf. ab, versetzt mit einem Überschuss an Ethanol und erhitzt 6 Stunden unter leichtem Rückfluss auf 80°C, bevor man die Flüchtigen abtrennt. Hierbei bestehen die Flüchtigen insbesondere aus dem jeweiligen Essigsäureester des eingesetzten Alkohols, den man im Falle der flüchtigen Alkohole dann leicht mit dem überschüssigen Alkohol destillativ entfernen kann. Der Rückstand besteht aus dem entsprechenden, Alkoxygruppen tragenden Siloxan (im Beispiel 3 Ethoxygruppen tragenden Siloxan), wie das zugehörige ²⁹Si-NMR-Spektrum ausweist.

Auf diese Weise gelangt man erfindungsgemäß einfach zu den entsprechenden Alkoxysilanen und/oder - siloxanen, die man auch als polymerisationsaktive Massen und dann bevorzugt unter Zusatz geeigneter Vernetzungskatalysatoren, ggf. noch in Abmischung mit weiteren vernetzenden Silanen und/ oder Siloxanen, mit Füllstoffen und/ oder Pigmenten gefüllt und/ oder ungefüllt als Kleb - und Dichtstoffe einsetzen kann.

Neutralisiert man die Brönstedtsäure hingegen nicht, so führt z.B. die Umsetzung des noch Brönstedt-sauren Acetoxysiloxans mit Ethanol unter ansonsten gleichen Bedingungen zu einem aus in etwa gleichen Anteilen von Ethoxy- und Hydroxygruppen tragenden Siloxanen bestehenden Gemisch unter Kettenverlängerung (siehe nichterfindungsgemäßes Vergleichsbeispiel 4).

Ein weiterer Gegenstand der Erfindung ist somit ein Verfahren zur Umwandlung der erfindungsgemäß im Aufschlusssystem gewonnenen Acetoxygruppen aufweisenden Silane und/ oder Siloxane in Alkoxygruppen aufweisende Silane und/ oder Siloxane, wobei man
a) das Brönstedt-saure Acetoxysilan und oder Acetoxysiloxan zunächst mit mindestens einer zur Neutralisation der Brönstedtsäure ausreichenden Menge einer Base beaufschlagt,
b) die entstandene Salzfällung gegebenenfalls abtrennt,
c) einen 100 bis 500 %igen, bevorzugt einen 150 bis 350%igen Überschuss eines Alkohols bezogen auf das im Acetoxysilan und/ oder Acetoxysiloxan enthaltene Acetoxygruppen-Äquivalent hinzufügt und
d) den Austausch Si-gebundener Acetoxyfunktionen gegen Alkoxyreste im Temperaturbereich von vorzugsweise 60°C bis 130°C, bevorzugt von 70°C bis 120°C in einem Zeitraum von vorzugsweise 1 bis 10 Stunden vornimmt und
e) gegebenenfalls den entstandenen Essigsäureester zusammen mit dem überschüssigen Alkohol destillativ entfernt.

Erfindungsgemäß bevorzugt ist der eingesetzte Alkohol vorzugsweise ausgewählt aus der Gruppe der C₁ bis C₁₀- Alkanole, wie Methanol, Ethanol, 1- Propanol, 2-Propanol, Isopropanol, (1-Butanol, 2-Butanol, iso-Butanol, tertiär-Butanol), Pentanole, Hexanole, Heptanole, Octanole, Nonanole, Dekanole jeweils umfassend auch deren Isomere,
sowie Allylalkohol, 1-Hexenol, Butindiol, Dodecanol, Stearylalkohol, Vinyloxybutanol, 2-Ethylhexanol, Cyclohexanol, Benzylalkohol, Ethylenglykol, Propylenglykol, Di-, Tri- und Polyethylenglykol, 1,2-Propylenglykol, Di- und Polypropylenglykol, 1,4-Butandiol, 1,6-Hexandiol, Trimethylolpropan, Glycerin, Pentaerythrit, Sorbit oder auf Naturstoffen basierende, Hydroxylgruppen tragende Verbindungen, besonders bevorzugt Polyetherole oder Phenole, Verbindungen mit 1 bis 8 phenolischen OH-Funktionen, wie Phenol, Alkyl- und Arylphenole, Bisphenol A und Novolake.

Erfindungsgemäß wird der Alkohol in einem 100 bis 500 %igen, bevorzugt in einem 150 bis 350%igen Überschuss bezogen auf das im Acetoxysiloxan enthaltene Acetoxygruppen-Äquivalent hinzufügt.

Ein weiterer Gegenstand der vorliegenden Erfindung ist ein Verfahren zur Umwandlung der im Aufschlusssystem gewonnenen Acetoxygruppen aufweisenden Siloxane in Hydroxygruppen aufweisende Siloxane, wobei man diese einer Hydrolyse in einem alkalischen System unterwirft. Es entspricht einer besonderen Ausführungsform der Erfindung, dass man die Hydrolyse in einem wässrigen alkalischen System vornimmt, wobei die darin verwendete Base ein Hydroxyd der Alkalimetalle und/ oder der Erdalkalimetalle und oder ein Carbonat und/ oder Hydrogencarbonat der Alkali- und/ oder Erdalkalimetalle darstellt. Bevorzugt stellt das wässrige alkalische System eine wässrige Hydrogencarbonatlösung dar. Die Hydrolyse wird vorzugsweise bei Temperaturen ≤ 90°C, bevorzugt bei Temperaturen < 50°C und bevorzugt über einen Zeitraum von mindestens 2 Stunden durchgeführt.

Ein weiterer Aspekt des erfindungsgemäßen Verfahrens liegt darin, dass die Hydrolyse in einem wässrigen alkalischen System bevorzugt so vorgenommen wird, dass durch die Zugabe der verwendeten Base für die Dauer der Hydrolyse sichergestellt wird, dass der pH-Wert der Reaktionslösung nicht unter 10 absinkt. Hierbei erschließt die hohe Reaktivität der nach dem erfindungsgemäßen Verfahren gewonnenen Acetoxysilane und/oder-siloxane deren einfache Umwandlung in die entsprechenden hydroxyfunktionellen Silane und/oder Siloxane (hier z.B. in die PDM-Siloxane).

Unter dem Aspekt des vollständigen Recyclings ist das erfindungsgemäße Verfahren auch dahingehend besonders attraktiv, als dass es die einfache Abtrennung und Isolierung der Füllstoffe und Pigmente aus den hochmolekular-vernetzten, mit Füllstoff und Pigmenten beaufschlagten Silikonmatrices gestattet. Die Füllstoffe und Pigmente können nach durchgeführtem erfindungsgemäßen Aufschluss sehr einfach z.B. durch Absitzenlassen, Filtration, Zentrifugieren, etc. abgeschieden werden (Filtration in Beispiel 5, Recycling einer weißen Fugenmasse).

Ein weiterer Gegenstand vorliegender Erfindung ist somit, dass die in den zu recyclenden Silikonen, insbesondere in den zu recyclenden Silikonkautschuken enthaltenden Füllstoffe am Ende des Aufschlusses durch Absitzenlassen, und/ oder Filtration und/ oder Zentrifugieren abgetrennt werden.

### Beispiele

Falls nicht explizit anders angegeben, sind alle hier verwendeten Prozentangaben als Angaben in Massenprozent zu verstehen. Die ²⁹Si-NMR-Proben werden im Rahmen dieser Erfindung bei einer Messfrequenz von 79,49 MHz in einem Bruker Avance III Spektrometer, das mit einem Probenkopf 287430 mit 10 mm Spaltbreite ausgestattet ist, bei 22°C gelöst in CDCl₃ und gegen Tetramethylsilan (TMS) als externem Standard [δ(²⁹Si) = 0,0 ppm] gemessen.

### Beispiel 1 (erfindungsgemäß)

Ein opaker Silikonschlauch (Fa. Büchi, Artikelnummer: 048355) von 9 mm Außen- und 6 mm-Innendurchmesser wurde in Stückchen irregulärer Geometrie von durchschnittlich ca. 3 bis 4 mm Größe zerschnitten. In einem 500-ml-Vierhalskolben versehen mit KPG-Rührer und aufgesetztem Rückflusskühler werden 50 g dieser Silikonstückchen zusammen mit 50 g Dekamethylcyclopentasiloxan und 12,5 g Essigsäureanhydrid, 3,7 g Essigsäure und 0,23 g Trifluormethansulfonsäure 6 Stunden lang unter Rühren auf 130°C erhitzt. Bereits nach etwa 45 Minuten stellt sich die Reaktionsmischung als eine opake, homogene Flüssigkeit ohne irgendwelche erkennbaren Feststoffanteile dar.

Nach Abkühlen des Reaktionsansatzes wird ein ²⁹Si-NMR-Spektrum angefertigt, das in allen typischen Signallagen charakteristisch für ein lineares α,ω-Diacetoxypolydimethylsiloxan ist.

### Beispiel 2 (erfindungsgemäß)

Ein Silikonöl (Polydimethylsiloxan der mittleren Kettenlänge N = 50) wird einer 6 stündigen Wärmebehandlung bei 130°C in einem Aufschlussystem bestehend aus Essigsäureanhydrid (4,6 Mol bezogen auf 1 Mol des Polydimethylsiloxans), Essigsäure (3,0 Massenprozent bezogen auf den Gesamtansatz) und Trifluormethansulfonsäure (0,2 Massenprozent bezogen auf den Gesamtansatz) unterworfen. Das ²⁹Si-NMR-Spektrum des erhaltenen Silikons belegt, dass ein Acetoxy-funktionalisiertes Siloxan entstanden ist, das Anteile an Trimethylsilylacetat (stammend aus den Trimethylsilyl-Endgruppen des Silikonöls) enthält.

### Beispiel 3 (erfindungsgemäß)

30 g des in Bsp. 1 gewonnenen, trifluormethansulfonsauren linearen α,ω-Diacetoxydimethylsiloxans werden unter Rühren in einem 100-ml-Dreihalskolben mit Magnetrührer, Innenthermometer und aufgesetztem Rückflusskühler mit 0,20 g festen Kaliumacetats versetzt. Dann werden 14,7 ml technischen Ethanols (99 %ig, 300 %-stöchiometrischer Überschuss) hinzugefügt und man erhitzt für die Dauer von 6 Stunden auf 80°C, so dass sich immer ein leichter Rückfluss einstellt. Nach Erkalten des Reaktionsansatzes und Abfiltrieren des ausgefallenen Salzes werden die Flüchtigen bestehend aus Essigsäurethylester und überschüssigem Alkohol am Rotationsverdampfer abgetrennt. Der Rückstand besteht aus dem entsprechenden, Ethoxygruppen tragenden Siloxan, wie das zugehörige ²⁹Si-NMR-Spektrum belegt.

### Beispiel 4 (erfindungsgemäß)

30 g des in Bsp. 1 gewonnenen, trifluormethansulfonsauren linearen α,ω-Diacetoxydimethylsiloxans werden unter Rühren in einem 100-ml-Dreihalskolben mit Magnetrührer, Innenthermometer und aufgesetztem Rückflusskühler mit 14,7 ml technischen Ethanols (99 %ig, 300 %-Überschuss) versetzt und man erhitzt für die Dauer von 6 Stunden auf 80°C, so dass sich immer ein leichter Rückfluss einstellt. Nach Erkalten des Reaktionsansatzes werden die Flüchtigen bestehend aus Essigsäurethylester und überschüssigem Alkohol am Rotationsverdampfer abgetrennt. Der Rückstand besteht aus einem aus etwa gleichen Anteilen von Ethoxy- und Hydroxygruppen tragenden Siloxanen zusammengesetzten Gemisch, das eine Kettenverlängerung bezogen auf das eingesetzte Acetoxysilan zeigt, wie das zugehörige ²⁹Si-NMR-Spektrum belegt.

### Beispiel 5 (erfindungsgemäß)

30 g einer durchgehärteten, mit weißem Füllstoff versehenen Silikonfugenmasse (MEM Universalsilikon, Innen + Außen, Artikelnummer 308226) werden zunächst in Stückchen irregulärer Geometrie von durchschnittlich ca. 3 bis 4 mm Größe zerschnitten und dann in einem 500-ml-Vierhalskolben versehen mit KPG-Rührer, Innenthermometer und aufgesetztem Rückflusskühler vorgelegt, mit 70 g Dekamethylcyclopentasiloxan , 12,5 g Essigsäureanhydrid, 3,7 g Essigsäure und 0,69 g konzentrierter Schwefelsäure versetzt. Unter Rühren erhitzt man die Reaktionsmatrix auf 130°C und man beaufschlagt nach 30 Minuten die inzwischen in Gänze verflüssigte Reaktionsmischung mit einer weiteren Portion (40 g) der zuvor in Stückchen geschnittenen, durchgehärteten weißen Silikonfugenmasse.

Nach zwei Stunden bei 130°C erlangt die Reaktionsmischung eine so große Viskosität, dass man eine weitere Menge an Essigsäureanhydrid (12,5 g) hinzufügt.

Nach weiteren 6 Stunden bei 130°C und Abkühlung auf 100°C werden 2,76 g Kaliumacetat zur Neutralisation der Schwefelsäure eingetragen. Unter weiteren, ständigen Rühren lässt man den Ansatz auf 25°C abkühlen und trennt den Feststoff mit Hilfe einer Filterpresse (Filterscheibe Seitz K300) ab. Isoliert werden dabei 38,5 g eines weißen Filterrückstands.

Von dem leicht gelblichen, klaren Filtrat wird ein ²⁹Si-NMR-Spektrum angefertigt, das in allen typischen Signallagen charakteristisch für ein lineares α,ω-Diacetoxypolydimethylsiloxan ist.

### Beispiel 6 (erfindungsgemäß)

Weiterverarbeitung des im Beispiel 5 gewonnenen, Acetoxygruppen enthaltenden Siloxans zu einem Hydroxygruppen tragenden Siloxan

In einem 5oo-ml-Vierhalskolben mit KPG-Rührer, Innenthermometer und aufgesetztem Rückflusskühler werden 100 g destillierten Wassers mit 1,0 Natriumhydrogencarbonat (NaHCO₃) unter Rühren bei 25°C vorgelegt. Man fügt zügig (leichtes Schäumen) 100 g des klaren Filtrats aus Beispiel 5 hinzu und ergänzt portionsweise insgesamt 17,2 g Natriumhydrogencarbonat und kontrolliert mit Hilfe feuchten Universalindikatorpapiers, dass die Reaktionsmatrix einen pH-Wert von ca. 10 hat. Danach erwärmt man den Ansatz für die Dauer von 6 Stunden auf 80°C.

Nach Abkühlen des Ansatzes wird die alkalische, wässrige Phase mit Hilfe eines Scheidetrichters von der Silikonphase abgetrennt. Die Silikonphase wird über Natriumsulfat getrocknet. Ein hiervon aufgenommenes ²⁹Si-NMR-Spektrum belegt durch seine typischen Signallagen, dass ein lineares α,ω-Dihydroxy-polydimethylsiloxan entstanden ist.

### Beispiel 7 (erfindungsgemäß)

### Aufschluss einer rot eingefärbten Silikonbackform

90 g einer in Stückchen irregulärer Geometrie von durchschnittlich ca. 3 bis 4 mm Größe zerschnittenen, rot-orange eingefärbten Silikonbackform (Muffinbackform, Fa. TEDI, Artikelnummer 915270410510000000) werden in einem 500-ml-Vierhalskolben mit KPG-Rührer, Innenthermometer und aufgesetztem Rückflusskühler mit 160 g Dekamethylcyclopentasiloxan, 12,5 g Essigsäureanhydrid und 0,5 g Trifluormethansulfonsäure unter Rühren auf 120°C erhitzt.

Bereits nach etwa einer Stunde sind alle Silikonstückchen vollständig aufgelöst. Man lässt den Ansatz erkalten und entnimmt eine Probe, deren zugehöriges ²⁹Si-NMR-Spektrum in allen typischen Signallagen charakteristisch für ein lineares α,ω-Diacetoxypoly-dimethylsiloxan ist.

## Patentansprüche

1. Verfahren für das Recycling von Silikonen, insbesondere von Silikonkautschuk und/ oder Silikonölen, durch deren chemische Transformation in Acetoxygruppen aufweisende Silane und/oder Siloxane, **dadurch gekennzeichnet, dass** man die zu recycelnden Silikone einer Wärmebehandlung in Aufschlusssystemen, umfassend Essigsäureanhydrid und/oder Acetoxysiloxan, sowie zumindest eine Brönstedtsäure, vorzugsweise unter Zusatz von Essigsäure unterzieht.

2. Verfahren nach Anspruch 1, **dadurch gekennzeichnet, dass** das Aufschlusssystem umfasst
a) Essigsäureanhydrid und Brönstedtsäure,
b) Essigsäureanhydrid, Siloxanzyklen und/oder hydroxyfunktionelle Siloxane sowie Brönstedtsäure,
c) Acetoxysiloxan und Brönstedtsäure, oder
d) Acetoxysiloxan, Siloxanzyklen und/oder hydroxyfunktionelle Siloxane, Essigsäureanhydrid sowie Brönstedtsäure,
wobei vorzugsweise jeweils Essigsäure zugesetzt wird.

3. Verfahren gemäß einem der Ansprüche 1 oder 2, **dadurch gekennzeichnet, dass** als Brönstedtsäuren Protonensäuren mit einem pKa-Wert kleiner - 1,30, wie vorzugsweise Salpetersäure, Methansulfonsäure und p-Toluolsulfonsäure, vorzugsweise Protonensäuren mit einem pKa-Wert kleiner - 2,90 wie vorzugsweise konzentrierte Schwefelsäure,
besonders bevorzugt Protonensäuren mit einem pKa-Wert kleiner - 4,90 wie vorzugsweise die Perfluoralkansulfonsäuren wie Heptafluorpropansulfonsäure, Pentafluorethansulfonsäure, Trifluormethansulfonsäure, dann Perchlorsäure und Chlorsulfonsäure
verwendet werden, wobei insbesondere Perfluoralkansulfonsäuren präferiert werden, und hierbei Trifluormethansulfonsäure ganz besonders bevorzugt ist,
sowie vorzugsweise sulfonsaure oder perfluoralkylsulfonsaure lonenaustauscherharze.

4. Verfahren nach zumindest einem der Ansprüche 1 bis 3, **dadurch gekennzeichnet, dass** die in den Aufschlusssystemen verwendete Brönstedtsäure in Mengen von 0,1 bis 1,5 Massenprozent, bevorzugt in Mengen von 0,15 bis 1,0 Massenprozent und besonders bevorzugt in Mengen von 0,2 bis 0,8 Massenprozent bezogen auf die Gesamtmasse des jeweiligen Aufschlusssystems einschließlich vorzugsweise zugesetzter Essigsäure eingesetzt wird.

5. Verfahren nach zumindest einem der Ansprüche 1 bis 4, **dadurch gekennzeichnet, dass** dem Aufschlusssystem Essigsäure in Mengen von 0,5 bis 4,0 Massenprozent, vorzugsweise von 1,5 bis 3,5 Massenprozent bezogen auf die Gesamtmasse des jeweiligen Aufschlusssystems hinzugesetzt wird.

6. Verfahren nach zumindest einem der Ansprüche 1 bis 5, **dadurch gekennzeichnet, dass** die Wärmebehandlung im Aufschlusssystem bei Normaldruck (1013 hPa), Unter- oder Überdruck und besonders bevorzugt bei Normaldruck durchgeführt wird.

7. Verfahren nach zumindest einem der Ansprüche 1 bis 6, **dadurch gekennzeichnet, dass** die Wärmebehandlung im Aufschlusssystem im Temperaturbereich von 50°C bis 200°C, vorzugsweise 80°C bis 160°C, insbesondere 120 bis 150°C vorgenommen wird.

8. Verfahren zur Umwandlung der gemäß Anspruch 1 bis 7 im Aufschlusssystem gewonnenen Acetoxygruppen aufweisenden Silane und/ oder Siloxane in Alkoxygruppen aufweisende Silane und/ oder Siloxane, **dadurch gekennzeichnet, dass** man
f) das Brönstedt-saure Acetoxysilan und/ oder Acetoxysiloxan zunächst mit mindestens einer zur Neutralisation der Brönstedtsäure ausreichenden Menge einer Base beaufschlagt,
g) die entstandene Salzfällung gegebenenfalls abtrennt,
h) einen 100 bis 500 %igen, bevorzugt einen 150 bis 350%igen Überschuss eines Alkohols bezogen auf das im Acetoxysilan und/ oder Acetoxysiloxan enthaltene Acetoxygruppen-Äquivalent hinzufügt und
i) den Austausch Si-gebundener Acetoxyfunktionen gegen Alkoxyreste im Temperaturbereich von vorzugsweise 60°C bis 130°C, bevorzugt von 70°C bis 120°C in einem Zeitraum von vorzugsweise 1 bis 10 Stunden vornimmt und
j) gegebenenfalls den entstandenen Essigsäureester zusammen mit dem überschüssigen Alkohol destillativ entfernt.

9. Verfahren nach Anspruch 8, **dadurch gekennzeichnet, dass** der eingesetzte Alkohol ausgewählt ist aus der Gruppe der C₁ bis C₁₀- Alkanole, wie vorzugsweise
Methanol, Ethanol, 1- Propanol, 2-Propanol, Isopropanol, 1-Butanol, 2-Butanol, iso-Butanol, tertiär-Butanol, Pentanole, Hexanole, Heptanole, Octanole, Nonanole, Dekanole sowie Isomere der vorgenannten,
sowie aus der Gruppe umfassend Allylalkohol, 1-Hexenol, Butindiol, Dodecanol, Stearylalkohol, Vinyloxybutanol, 2-Ethylhexanol, Cyclohexanol, Benzylalkohol, Ethylenglykol, Propylenglykol, Di-, Tri- und Polyethylenglykol, 1,2-Propylenglykol, Di- und Polypropylenglykol, 1,4-Butandiol, 1,6-Hexandiol, Trimethylolpropan, Glycerin, Pentaerythrit, Sorbit und/oder auf Naturstoffen basierende, Hydroxylgruppen tragende Verbindungen,
wobei Polyetherole oder Phenole,
Verbindungen mit 1 bis 8 phenolischen OH-Funktionen, wie Phenol, Alkyl- und Arylphenole, Bisphenol A und Novolake
besonders bevorzugt sind.

10. Verfahren zur Umwandlung der gemäß Anspruch 1 bis 7 im Aufschlusssystem gewonnenen Acetoxygruppen aufweisenden Silane und/ oder Siloxane in Hydroxygruppen aufweisende Silane und/ oder Siloxane, **dadurch gekennzeichnet, dass** man diese einer Hydrolyse in einem alkalischen System unterwirft, wobei die darin verwendete Base vorzugsweise ein Hydroxyd der Alkalimetalle und/ oder der Erdalkalimetalle und oder ein Carbonat und/ oder Hydrogencarbonat der Alkali- und/ oder Erdalkalimetalle darstellt.

11. Verfahren nach Anspruch 10, **dadurch gekennzeichnet, dass** das alkalische System eine wässrige Hydrogencarbonatlösung darstellt.

12. Verfahren nach Anspruch 10 oder 11, **dadurch gekennzeichnet, dass** die Hydrolyse bei Temperaturen ≤ 90°C, bevorzugt bei Temperaturen < 50°C und bevorzugt über einen Zeitraum von mindestens 2 Stunden durchgeführt wird.

13. Verfahren nach Anspruch 12, **dadurch gekennzeichnet, dass** die Hydrolyse in einem wässrigen alkalischen System so vorgenommen wird, dass durch die Zugabe der verwendeten Base für die Dauer der Hydrolyse sichergestellt wird, dass der pH-Wert der Reaktionslösung nicht unter 10 absinkt.

14. Verfahren nach Anspruch 1 bis 7, **dadurch gekennzeichnet, dass** die in den zu recyclenden Silikonen, insbesondere in den zu recyclenden Silikonkautschuken enthaltenden Füllstoffe und/ oder Pigmente am Ende des Aufschlusses durch Absitzenlassen, und/ oder Filtration und/ oder Zentrifugieren abgetrennt werden.

## Claims

1. Process for recycling silicones, especially silicone rubber and/or silicone oils, by the chemical transformation thereof to silanes and/or siloxanes having acetoxy groups, **characterized in that** the silicones to be recycled are subjected to a heat treatment in digestion systems comprising acetic anhydride and/or acetoxysiloxane, and at least one Bronsted acid, preferably with addition of acetic acid.

2. Process according to Claim 1, **characterized in that** the digestion system comprises
a) acetic anhydride and Bronsted acid,
b) acetic anhydride, siloxane cycles and/or hydroxyfunctional siloxanes and Bronsted acid,
c) acetoxysiloxane and Bronsted acid, or
d) acetoxysiloxane, siloxane cycles and/or hydroxyfunctional siloxanes, acetic anhydride and Bronsted acid,
preferably with addition of acetic acid in each case.

3. Process according to either of Claims 1 and 2, **characterized in that** Bronsted acids used are protic acids with a pKa of less than -1.30, such as preferably nitric acid, methanesulfonic acid and p-toluenesulfonic acid, preferably protic acids having a pKa of less than -2.90, such as preferably concentrated sulfuric acid, more preferably protic acids having a pKa of less than - 4.90, such as preferably the perfluoroalkanesulfonic acids such as heptafluoropropanesulfonic acid, pentafluoroethanesulfonic acid, trifluoromethanesulfonic acid, then perchloric acid and chlorosulfonic acid,
with preference especially for perfluoroalkanesulfonic acids, and very particular preference here for trifluoromethanesulfonic acid,
and preferably sulfonic acid or perfluoroalkylsulfonic acid ion exchange resins.

4. Process according to at least one of Claims 1 to 3, **characterized in that** the Bronsted acid used in the digestion systems is used in amounts of 0.1 to 1.5 per cent by mass, preferably in amounts of 0.15 to 1.0 per cent by mass and more preferably in amounts of 0.2 to 0.8 per cent by mass, based on the total mass of the respective digestion system including acetic acid added with preference.

5. Process according to at least one of Claims 1 to 4, **characterized in that** acetic acid is added to the digestion system in amounts of 0.5 to 4.0 per cent by mass, preferably of 1.5 to 3.5 per cent by mass, based on the total mass of the respective digestion system.

6. Process according to at least one of Claims 1 to 5, **characterized in that** the heat treatment in the digestion system is performed at standard pressure (1013 hPa), reduced pressure or elevated pressure, and more preferably at standard pressure.

7. Process according to at least one of Claims 1 to 6, **characterized in that** the heat treatment in the digestion system is undertaken within the temperature range from 50°C to 200°C, preferably 80°C to 160°C, especially 120 to 150°C.

8. Process for conversion of the silanes and/or siloxanes having acetoxy groups that are obtained in the digestion system according to Claims 1 to 7 to silanes and/or siloxanes having alkoxy groups, **characterized in that**
f) the Bronsted-acidic acetoxysilane and/or acetoxysiloxane is first contacted with at least an amount of a base sufficient for neutralization of the Bronsted acid,
g) the resultant salt precipitate is optionally removed,
h) a 100% to 500%, preferably 150% to 350%, excess of an alcohol based on the acetoxy group equivalent present in the acetoxysilane and/or acetoxysiloxane is added and
i) the exchange of Si-bonded acetoxy functions for alkoxy radicals is undertaken within the temperature range from preferably 60°C to 130°C, more preferably from 70°C to 120°C, within a period of preferably 1 to 10 hours and
j) the resultant acetic ester is optionally removed by distillation together with the excess alcohol.

9. Process according to Claim 8, **characterized in that** the alcohol used is selected
from the group of the C₁ to C₁₀-alkanols, such as preferably
methanol, ethanol, 1-propanol, 2-propanol, isopropanol, 1-butanol, 2-butanol, isobutanol, tert-butanol, pentanols, hexanols, heptanols, octanols, nonanols, decanols and isomers of the above,
and from the group comprising allyl alcohol, 1-hexenol, butynediol, dodecanol, stearyl alcohol, vinyloxybutanol. 2-ethylhexanol, cyclohexanol, benzyl alcohol, ethylene glycol, propylene glycol, di-, tri- and polyethylene glycol, 1,2-propylene glycol, di- and polypropylene glycol, 1,4-butanediol, 1,6-hexanediol, trimethylolpropane, glycerol, pentaerythritol, sorbitol and/or hydroxyl group-bearing compounds based on natural products,
particular preference being given to polyetherols or phenols,
compounds having 1 to 8 phenolic OH functions, such as phenol, alkyl- and arylphenols, bisphenol A and novolaks.

10. Process for converting the silanes and/or siloxanes having acetoxy groups that are obtained in the digestion system according to Claims 1 to 7 to silanes and/or siloxanes having hydroxyl groups, **characterized in that** these are subjected to a hydrolysis in an alkaline system, in which the base used is preferably a hydroxide of the alkali metals and/or of the alkaline earth metals and/or a carbonate and/or hydrogencarbonate of the alkali metals and/or alkaline earth metals.

11. Process according to Claim 10, **characterized in that** the alkaline system is an aqueous hydrogencarbonate solution.

12. Process according to Claim 10 or 11, **characterized in that** the hydrolysis is conducted at temperatures of ≤ 90°C, preferably at temperatures of < 50°C, and preferably over a period of at least 2 hours.

13. Process according to Claim 12, **characterized in that** the hydrolysis is undertaken in an aqueous alkaline system in such a way that the addition of the base used ensures for the duration of the hydrolysis that the pH of the reaction solution does not fall below 10.

14. Process according to Claims 1 to 7, **characterized in that** the fillers and/or pigments present in the silicones to be recycled, especially in the silicone rubbers to be recycled, are removed at the end of the digestion by settling, and/or filtration and/or centrifugation.

## Revendications

1. Procédé pour le recyclage de silicones, en particulier de caoutchouc de silicone et/ou d'huiles de silicone, par leur transformation chimique en silanes et/ou siloxanes présentant des groupes acétoxy, **caractérisé en ce qu'**on soumet les silicones devant être recyclées à un traitement thermique dans des systèmes de digestion, comprenant de l'anhydride d'acide acétique et/ou de l'acétoxysiloxane, ainsi qu'au moins un acide de Brönsted, de préférence avec ajout d'acide acétique.

2. Procédé selon la revendication 1, **caractérisé en ce que** le système de digestion comprend
a) de l'anhydride d'acide acétique et un acide de Brönsted,
b) de l'anhydride d'acide acétique, des cycles siloxanes et/ou des siloxanes fonctionnalisés par hydroxy ainsi qu'un acide de Brönsted,
c) de l'acétoxysiloxane et un acide de Brönsted, ou
d) de l'acétoxysiloxane, des cycles siloxane et/ou des siloxanes fonctionnalisés par hydroxy, de l'anhydride d'acide acétique ainsi qu'un acide de Brönsted,
de préférence, de l'acide acétique étant ajouté à chaque fois.

3. Procédé selon l'une quelconque des revendications 1 et 2, **caractérisé en ce qu'**en tant qu'acides de Brönsted, des acides protoniques dotés d'une valeur de pKa inférieure à -1,30, comme de préférence l'acide nitrique, l'acide méthanesulfonique et l'acide p-toluènesulfonique, de préférence des acides protoniques dotés d'une valeur de pKa inférieure à -2,90 comme de préférence l'acide sulfurique concentré, particulièrement préférablement des acides protoniques dotés d'une valeur de pKa inférieure à -4,90 comme de préférence les acides perfluoroalcanesulfoniques comme l'acide heptafluoropropanesulfonique, l'acide pentafluoroéthanesulfonique, l'acide trifluorométhanesulfonique, puis l'acide perchlorique et l'acide chlorosulfonique, sont utilisés, les acides perfluoroalcanesulfoniques étant en particulier préférés, et à cet égard l'acide trifluorométhanesulfonique étant tout particulièrement préféré,
ainsi que de préférence des résines échangeuses d'ions à acide sulfonique ou à acide perfluoroalkylsulfonique.

4. Procédé selon au moins l'une des revendications 1 à 3, **caractérisé en ce que** l'acide de Brönsted utilisé dans les systèmes de digestion est utilisé en des quantités de 0,1 à 1,5 pour cent en masse, préférablement en des quantités de 0,15 à 1,0 pour cent en masse et particulièrement préférablement en des quantités de 0,2 à 0,8 pour cent en masse par rapport à la masse totale du système de digestion respectif y compris de préférence l'acide acétique ajouté.

5. Procédé selon au moins l'une des revendications 1 à 4, **caractérisé en ce que** de l'acide acétique est ajouté au système de digestion en des quantités de 0,5 à 4,0 pour cent en masse, de préférence de 1,5 à 3,5 pour cent en masse par rapport à la masse totale du système de digestion respectif.

6. Procédé selon au moins l'une des revendications 1 à 5, **caractérisé en ce que** le traitement thermique est mis en œuvre dans le système de digestion à pression normale (1 013 hPa), en dépression ou en surpression et particulièrement préférablement à pression normale.

7. Procédé selon au moins l'une des revendications 1 à 6, **caractérisé en ce que** le traitement thermique est effectué dans le système de digestion dans la plage de température de 50 °C à 200 °C, de préférence de 80 °C à 160 °C, en particulier de 120 à 150 °C.

8. Procédé pour la conversion des silanes et/ou des siloxanes présentant des groupes acétoxy, obtenus selon les revendications 1 à 7 dans le système de digestion, en silanes et/ou siloxanes présentant des groupes alcoxy, **caractérisé en ce que**
f) on soumet d'abord l'acétoxysilane et/ou l'acétoxysiloxane acide(s) au sens de Brönsted à au moins une quantité d'une base suffisante pour la neutralisation de l'acide de Brönsted,
g) on sépare éventuellement la précipitation de sel formée,
h) on ajoute un excès de 100 à 500 %, préférablement un excès de 150 à 350 % d'un alcool par rapport à l'équivalent de groupes acétoxy contenus dans l'acétoxysilane et/ou l'acétoxysiloxane et
i) on effectue l'échange des fonctions acétoxy liées à Si contre des radicaux alcoxy dans la plage de température de préférence de 60 °C à 130 °C, préférablement de 70 °C à 120 °C dans une période de temps de préférence de 1 à 10 heures et
j) éventuellement on élimine par distillation l'ester d'acide acétique formé conjointement avec l'alcool en excès.

9. Procédé selon la revendication 8, **caractérisé en ce que** l'alcool utilisé est choisi dans le groupe des alcanols en C₁ à C₁₀, comme de préférence le méthanol, l'éthanol, le 1-propanol, le 2-propanol, l'isopropanol, le 1-butanol, le 2-butanol, l'iso-butanol, le tert-butanol, les pentanols, les hexanols, les heptanols, les octanols, les nonanols, les décanols ainsi que les isomères des composés précédents,
ainsi que dans le groupe comprenant l'alcool allylique, le 1-hexénol, le butynediol, le dodécanol, l'alcool stéarylique, le vinyloxybutanol, le 2-éthylhexanol, le cyclohexanol, l'alcool benzylique, l'éthylèneglycol, le propylèneglycol, le diéthylèneglycol, le triéthylèneglycol et un polyéthylèneglycol, le 1,2-propylèneglycol, le dipropylèneglycol et un polypropylèneglycol, le 1,4-butanediol, le 1,6-hexanediol, le triméthylolpropane, la glycérine, le pentaérythritol, le sorbitol et/ou des composés à base de produits naturels, portant des groupes hydroxyle,
dans lequel des polyétherols ou des phénols, des composés comportant 1 à 8 fonctions OH phénoliques, comme un phénol, des alkylphénols et des arylphénols, le bisphénol A et des novolaks sont particulièrement préférés.

10. Procédé pour la conversion des silanes et/ou des siloxanes présentant des groupes acétoxy, obtenus selon les revendications 1 à 7 dans le système de digestion, en silanes et/ou siloxanes présentant des groupes hydroxy, **caractérisé en ce qu'**on soumet ceux-ci à une hydrolyse dans un système alcalin, la base utilisée dans celui-ci représentant de préférence un hydroxyde des métaux alcalins et/ou des métaux alcalino-terreux et/ou un carbonate et/ou un hydrogénocarbonate des métaux alcalins et/ou alcalino-terreux.

11. Procédé selon la revendication 10, **caractérisé en ce que** le système alcalin représente une solution aqueuse d'hydrogénocarbonate.

12. Procédé selon la revendication 10 ou 11, **caractérisé en ce que** l'hydrolyse est mise en œuvre à des températures ≤ 90 °C, préférablement à des températures < 50 °C et préférablement sur une période de temps d'au moins 2 heures.

13. Procédé selon la revendication 12, **caractérisé en ce que** l'hydrolyse est effectuée dans un système alcalin aqueux de telle manière qu'il soit assuré que, par l'ajout de la base utilisée pour la durée de l'hydrolyse, la valeur de pH de la solution de réaction ne descende pas au-dessous de 10.

14. Procédé selon les revendications 1 à 7, **caractérisé en ce que** les charges et/ou les pigments contenu(e)s dans les silicones devant être recyclées, en particulier dans les caoutchoucs de silicone devant être recyclés, sont séparé(e)s par décantation et/ou filtration et/ou centrifugation à la fin de la digestion.
